(19) **Europäisches Patentamt European Patent Office Office européen des brevets**

(11) **EP 3 886 117 B1**

(12) **EUROPEAN PATENT SPECIFICATION**

(45) Date of publication and mention of the grant of the patent:
**26.11.2025 Bulletin 2025/48**

(21) Application number: **19888171.6**

(22) Date of filing: **14.11.2019**

(51) International Patent Classification (IPC):
**G21F 9/00** *(2006.01)* **G21F 9/28** *(2006.01)*
**G21F 9/30** *(2006.01)*

(52) Cooperative Patent Classification (CPC):
**G21F 9/005; G21F 9/002; G21F 9/28; G21F 9/30;**
G21F 9/007

(86) International application number:
**PCT/RU2019/000816**

(87) International publication number:
**WO 2020/106181 (28.05.2020 Gazette 2020/22)**

(54) **METHOD FOR DECONTAMINATING A STRUCTURAL ELEMENT OF A NUCLEAR REACTOR**

VERFAHREN ZUR DEKONTAMINATION EINES STRUKTURELLEN ELEMENTS EINES KERNREAKTORS

PROCÉDÉ DE DÉSACTIVATION D'UN ÉLÉMENT DE LA STRUCTURE D'UN RÉACTEUR NUCLÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2018 RU 2018140999**

(43) Date of publication of application:
**29.09.2021 Bulletin 2021/39**

(73) Proprietors:
• **Joint Stock Company "Rosenergoatom"**
**Moscow 109507 (RU)**
• **Limited Liability Company "Intro-Micro"**
**St.Petersburg, 191036 (RU)**
• **Joint Stock Company "Science and Innovations"**
**Moscow 119180 (RU)**

(72) Inventors:
• **TSYGANOV, Aleksandr Borisovich**
**St. Petersburg, 199397 (RU)**
• **PETROVSKAYA, Anna Stanislavovna**
**Lomonosov, 198411 (RU)**
• **STAKHIV, Mikhail Romanovich**
**Ramenskoe, 140105 (RU)**

(74) Representative: **Friese Goeden Patentanwälte PartGmbB**
**Widenmayerstraße 49**
**80538 München (DE)**

(56) References cited:
EP-A2- 1 771 865     JP-A- S56 115 998
JP-B2- 2 892 857     RU-C1- 2 546 981
RU-C1- 2 603 015     RU-C1- 2 603 015
RU-C2- 2 374 046     US-A1- 2016 329 193

**Description**

The present invention is referred to the nuclear engineering field and can be applied in nuclear energy techniques intended for decontamination and safe handling of radioactive design components of nuclear power plants (NPP), in particular, for surface decontamination of irradiated reactor graphite and metal structures that have come into contact with the reactor coolant.

The methods for treating irradiated reactor graphite (see, for example, patents RU 2546981, RU 2212074, EP1771865, US 9040014), which consist in heat treatment of reactor graphite in an inert, and then in an oxidizing or reducing gas conditions with the release of gaseous compounds of radioactive isotopes and their subsequent binding in liquid or solid form are already known. In particular, the method according to the patent RU 2212074 includes the release of oxides of the carbon isotope $^{14}C$ from irradiated reactor graphite in the mode of blowout with heated air at the temperature from 450°C to 530°C and their subsequent chemical binding. The detriments of these analogues include the inability to provide preferably surface treatment of graphite (within a few microns in depth) due to the non-local nature of the thermal action on the graphite surface due to its high thermal conductivity (deep layers are also heated). Another detriment is the formation of carbon $^{14}C$ oxides and other radioactive isotopes in volatile form, which requires their further chemical binding with an increase in the volume of the generated radioactive waste in the liquid and solid phases. Also, the detriments of the known treatment methods include the need for preliminary dismantling and grinding of graphite bricks and design components of nuclear power plants with an initially high level of radioactivity, which worsens the conditions for radiation safety of personnel and increases the work labour input.

The methods for thermal treatment of spent reactor graphite with grinding, mixing with reactive chemicals and conducting high-temperature synthesis in an inert atmosphere to form a solid residue without releasing gaseous waste (for example, patents RF 2065220, RF 2192057) are already known. The indicated methods include grinding of graphite and adding titanium and/or aluminum, titanium dioxide and/or silicon dioxide to the grinded mass. Then the mixture is placed in a reactor filled with an inert gas and set off the reaction of combustion without flame. The hot fusion product under the RF patent No. 2065220 is compacted during combustion or after combustion of the mixture, and then sent to disposal. The detriments of the specified methods are the need for the preliminary dismantling and grinding of the graphite bricks and design components of NPP with initially high level of radioactivity, the inevitable release into the atmosphere of radioactive $^{14}C$ dioxide, as well as the increase in the amount of the resulting radioactive waste (RW) in sintering by high-temperature synthesis in the absence of a mechanism of selective pollutant removal with the highest concentration of radioactive isotopes. These factors worsen the personnel radiation safety conditions, increase the work labour input and do not allow to obtain RW in a compact form as a result.

The plasma methods for treating spent graphite, for example, according to patent RU 2435241, according to which layers of radioactive graphite are loaded into the furnace and ignited in an oxidizing medium with plasma generated by a plasma torch are already known. Then the plasma torch is turned off, fragmented radioactively contaminated metal structures are loaded into the furnace, melting is carried out with the dissolution of carbon in the metal, after which the slag flux melt is placed in a transport container and sent for solidification and subsequent disposal in special disposal sites. The detriments of this method include the inevitable contamination of the metal melt with radioactive isotopes and the loss of the possibility of its further use, as well as the release of radioactive isotopes (in particular, carbon dioxide $^{14}C$) when extracting melting gases from the furnace.

The method for plasma treatment of graphite according to patent RU 2580818 includes grinding it into fractions and then placing them in a plasma-chemical reactor as consumable electrodes, which are then vaporized in a low-temperature plasma with an oxidizer. The reaction products are deposited in the dispersed phase in the form of the bed ash are provided on the walls of the plasma-chemical reactor. The reaction product gases are removed from the reactor, the carbon oxides are liquified and sent for further disposal. The solid bed ash is extracted from the plasma-chemical reactor for subsequent disposal. The detriments of the proposed method are the complexity of extracting the radioactive bed ash formed on the walls of the plasma-chemical reactor, and the lack of a mechanism for selective pollutants removal with the highest concentration of radioactive isotopes.

The closest to the proposed method is the technical solution under the patent RF2603015, selected as the prototype. The known method for cleaning irradiated graphite bushings of a uranium-graphite reactor includes heating them, treating them with gas, transferring impurities to the gaseous phase, and cooling the carbon material, while the process is continued until the graphite bushing completely evaporates. The detriments of the known method chosen as the prototype is the need to dismantle and transport radioactive design components to the plasma-chemical chamber, which worsens the conditions for radiation safety of personnel, increases the work labour input. Another detriment of the method chosen as the prototype is the lack of a mechanism for selective pollutants removal with the highest concentration of the radioactive isotopes.

The object of the proposed method is to create the technology for the decontamination method for the nuclear reactor design components by plasma sputtering the surfaces of irradiated design components of nuclear power plants and graphite stack, which are mainly contaminated with radioactive isotopes during operation, to dislodge these radionuclides from the surface together with the surrounding atoms, to precipitate them on a cooled header and then extract them together with the header.

JP 2 892857 B2 dicloses a method in accordance with the preamble of claim 1. The object of the invention is achieved by a method with the features of claim 1. Preferred embodiments of the invention are disclosed in the dependent claims.

According to the present method, the electrode and the gas line that removes the reactionless gas from the plasma discharge zone is cooled by forced circulation of a liquid or gaseous refrigerant having a set input temperature.

The technical result achieved by the invention lies in the fact that at plasma sputtering the surface of design components of the nuclear power plants and graphite stack, as the most contaminated with radioactive isotopes, a significant reduction of radioactivity of the treated design components of the nuclear power plants, as well as concentration and the corresponding a contraction of the volume of the radioactive waste is achieved.

The indicated technical result is achieved by the fact that in the decontamination method for the nuclear reactor design component, comprising the nuclear reactor design component treating with a low-temperature plasma under the flow of reactionless gas according to the claimed decision to the selected site on the surface of the design component is supplied to the electrode, ignite plasma discharge between the surface of the design component is connected as the cathode, and the electrode connected as the anode, the operating parameters of the discharge effective to sputtering of the cathode are chosen, the cathode is sputtered, the electrode and gas pipeline, diverting inert gas from the discharge zone are cooled to the temperature sufficient for the precipitation of the sputtered atoms on the surface of the electrode and lines, after sputtering the cathode to the specified depth, the electrode is moved to a new area of treatment and the process steps are repeated until the complete treatment of the entire surface decontaminated design component.

Preferably, the surface of the irradiated graphite stack of a nuclear reactor is used as the decontaminated design components.

Further, the internal surfaces of the primary reactor coolant circuit, as well as its pipelines and coolant circulation systems, can be used as the design components.

Argon or nitrogen is preferably used as the reactionless gas.

The electrode can be made of copper, or aluminum, or aluminum alloy, or refractory metal, or tantalum.

According to the present method, it is preferable to create a temperature distribution along the length of the gas line that removes reactionless gas and sputtered atoms from the plasma discharge zone, so that the sputtered atoms with different evaporation temperatures will condense on different sections of the line.

The shape of the electrode surface is preferably chosen similar to the shape of the surface of the treated design component so that the gap between the electrode and the treated component is unchanged over the entire surface.

According to the present method, the pressure of the supplied inert gas on the order of the atmospheric one or lower is preferably chosen as the operating parameter of the discharge.

According to the present method, the gap between the electrode and the surface is preferably set as the operating parameter of the discharge so that it does not exceed 100 lengths of the electron free path at the operating pressure of an inert gas.

According to the present method, the electric voltage of the plasma discharge between the electrode and the surface in the range from 300 to 1000 Volts can be set as the operating parameter of the discharge.

According to the present method, the current density of the plasma discharge in the range of 0.1 - 1 A/cm2 can be set as the operating parameter of the discharge.

According to the present method as a working parameter category the repetitively-pulsed mode of plasma discharge may be chosen, and the pulses duration and their duty cycle according to the performance of the process of mass transfer of the sputtered atoms on the anode and taking into the account the cooling rate of the electrode may be determined.

The surface temperature of the electrode and the line sufficient for precipitation of the sputtered atoms is preferably chosen equal to the temperature at which the saturated vapor pressure of the precipitated atoms is 0.01 - 10 PA.

The cathode sputtering depth is preferably controlled by the level of residual radioactivity after treating the site on the surface of the nuclear reactor design component.

Thus, to achieve the objectives, according to the present method the nuclear reactor design component is treated with a low-temperature plasma under a flow of reactionless gas and, unlike the prototype, according to the present technical decision to the selected site on the surface of the treated design component is supplied to the electrode, ignite plasma discharge between the surface of the design component as the cathode, and the electrode connected as the anode, the operating parameters of the discharge effective to sputtering of the cathode are chosen, the electrode and gas pipeline, diverting inert gas from the discharge zone are cooled to the temperature sufficient for the precipitating of the sputtered isotopes on the surface of the electrode and lines, after sputtering the cathode to the specified depth, the electrode is moved to a new area of treatment and the process steps are repeated until the complete treatment of the entire surface decontaminated design component.

Sputtered surface atoms and radioactive isotopes are precipitated on the surface of the cooled electrode in the mass transfer mode. Sputtering of a surface with any geometry and any component composition is provided by the formation of a near-surface cathode layer of plasma with controlled energy of the ions bombarded. This allows decontamination at the location of the nuclear power plant until it is completely disassembled: the plasma source on the manipulator moves sequentially, step by step, along all the internal surfaces of the primary reactor coolant circuit, as well as on the surface of the graphite stack, while surface atoms enriched with isotopes are transferred to the surface of the cooled metal electrode, which is made, for example, of copper or aluminum. The electrode with the concentrated highly active precipitate is periodically removed and can be either compactly disposed or used as a high-grade concentrate with the desired isotope (in particular, $^{14}C$) for the beneficial application in medicine. The present method requires only the cost of electricity and the supply of inert gas (argon) with its recirculation. This method will allow to pre-reduce the activity of all reactor designs before repair or final disassembly and disposal, avoid the formation of the large volume of the liquid radioactive waste that will occur with competing methods of radiochemical decontamination, and additionally obtain some useful isotopes in significant quantities.

The claimed invention is illustrated by the following drawings.

Figure 1 schematically shows the fragment of the the vertical cross-section of the core of a graphite nuclear reactor, as well as a diagram of the formation of $^{14}C$ carbon isotopes during collisions of neutrons with nitrogen atoms and subsequent diffusion of $^{14}C$ with the precipitation and accumulation on the surface of the graphite stack.

Figure 2 shows a diagram explaining the transfer of radioactive isotopes from the core by the coolant and their precipitating on the surface of the design components of the primary reactor coolant circuit.

Figure 3 shows a sectional diagram explaining the general arrangement of the plasma source device. For ease of understanding, the power source, gas supply lines and electrical voltage are not shown.

Figure 4 shows a block flow diagram that in general terms explains the main components of the unit for plasma surface treatment.

Specific examples of the embodiment of the present invention, the following describe some particular embodiments, are not the only ones possible, not restrict the generality of the claimed invention, but clearly demonstrate the possibility of achieving the given set of essential features of the invention claimed technical result.

It is known that during the operating process of a nuclear power plant, radionuclides formed in the core enter the coolant, are transferred as a result of its circulation, and precipitate on the inner surfaces of the primary reactor coolant circuit metal structures, for example, of the WWER type. In addition, in graphite reactors (for example, the RBMK type), $^{14}C$ radionuclides are formed by neutron bombardment of nitrogen gas blowing through the graphite stack, and also precipitate on the surface of the stack. These contamination from the surface can not penetrate deep into the metal structures of the nuclear power plant, and therefore it is advisable to start full or partial decontamination with the collection and removal of radionuclides accumulated on the surface. The proposed method for plasma decontamination of nuclear power plant design components (the inner surfaces of the primary reactor coolant circuit components and the outer surface of irradiated reactor graphite, as the most radioactive after fuel assemblies) is based on ion sputtering of surface atoms in an inert gas plasma and collecting the sputtered atoms on a replaceable platform, followed by its extraction and disposal.

One example of the embodiment of the present method is the purification of irradiated reactor graphite from $^{14}C$, $^{60}Co$, $^{134}Cs$, $^{137}Cs$ radionuclides, etc., among which the $^{14}C$ isotope has the greatest activity, which has a half-life of 5730 years and is produced in significant quantities during operating process. The main reaction leading to the formation of the $^{14}C$ carbon isotope is the $^{14}N(n,p)^{14}C$ neutron capture reaction with a cross section of 1.8 Barn, which occurs in a helium - nitrogen mixture used for blowdown of the graphite stack. $^{13}C$ neutron capture$(n,\gamma)^{14}C$ isotopes $^{13}C$ in the graphite stack (the proportion of the isotope $^{13}C$ in graphite 0.011), as well as the formation of $^{14}C$ due to two sequential processes of neutron capture of $^{12}C(n,\gamma)^{13}C$ and $^{13}C(n,\gamma)^{14}C$ cross-section with 0.004 and 0.0015 barn (see [1]), give isotope breeding $^{14}C$ is distinctly smaller contribution. Blowdown of the reactor space and graphite stack with a nitrogen-helium mixture is carried out at a pressure slightly higher than the atmospheric one, the temperature in the center of the graphite stack is ~ 500 ° C. Under these conditions, the concentration of the gas mixture is ~$10^{19}$ cm$^{-3}$, the ratio of helium to nitrogen is 6/4, the nitrogen concentration is $0.4 \times 10^{19}$ cm$^{-3}$, the fluence (total flow) of neutrons for 30 years of operation of the reactor is $10^{22}$ neutrons/cm$^2$. The concentration of $^{14}C$ carbon accumulated in 1 cm$^3$ of the space filled with a gas mixture over 30 years as a result of neutron capture of $^{14}N$ (n,p)$^{14}C$ is estimated by the formula:

$$[^{14}C] = [N_2] \cdot \sigma(^{14}N(n,p)\ ^{14}C) \cdot [F_n] \qquad (1)$$

where $\sigma$ ($^{14}N(n, p)\ ^{14}C$) is the neutron capture cross-section, $[N_2]$ is the nitrogen concentration, and $[F_n]$ is the neutron fluence, while the value of the accumulated concentration $[^{14}C]$ is ~ $0.7 \times 10^{17}$ cm$^{-3}$.

Similarly, the concentration of carbon $^{14}C$ formed in 1 cm$^3$ of graphite stack as a result of two neutron capture processes $^{12}C$ (n, $\gamma$) $^{13}C$ and $^{13}C(n,\gamma)$ $^{14}C$ is determined by the formula:

$$[^{13}C]=[^{12}C] \cdot \sigma(^{12}C\ (n,\gamma)^{13}C) \cdot [F_n], \qquad\qquad (2a)$$

$$[^{14}C]=[^{13}C] \cdot \sigma(^{13}C\ (n,\gamma)^{14}C) \cdot [F_n], \qquad\qquad (2b)$$

where $[^{14}C]$, $[^{13}C]$ and $[^{12}C]$ are the concentrations of carbon isotopes - 14, 13 and 12, respectively.

According to the formulas (2a) and (2b), the accumulated concentrations of carbon isotopes in one cubic centimeter of graphite stack are $[^{13}C] = 4 \times 10^{18}$ cm$^{-3}$, $[^{14}C] = 4.8 \times 10^{13}$ cm$^{-3}$.

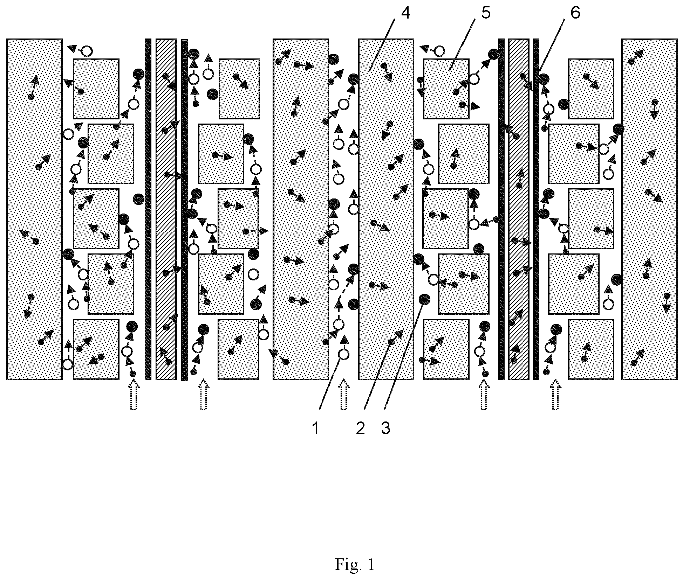

Fig. 1. schematically shows the mechanism of formation in the gas phase and precipitating of carbon $^{14}C$ on the surface. Nitrogen atoms 1, colliding with neutrons 2 in the nitrogen-helium mixture filling the reactor space, turn as a result of the reaction (1) into carbon isotopes $^{14}C$ - 3 and are precipitated on the surfaces of graphite bricks 4, graphite rings 5, which surround the technological channel with the fuel assembly 6. Vertical arrows (from the bottom to the top) show the direction of the nitrogen-helium mixture supply to the reactor space for cooling the stack. The gap between the surface of the graphite stack bricks and the technological channel with the fuel assembly is approximately 1 mm (this is the thickness of the gas layer above the surface). If $7 \times 10^{15}$ cm$^{-3}$ $^{14}C$ atoms fall out per unit area of the stack surface in 1 cm$^2$, then the enrichment of the entire surface of the graphite brick with a cross section of 25x25x60 $^{cm}$ is $5 \times 1019$ $^{14}C$ atoms, which is an order of magnitude higher than the enrichment of graphite by volume with the $^{14}C$ isotope as a result of neutron bombardment during operation. Also, additional surface contamination of graphite stack with the $^{14}C$ isotope may be caused by the penetration and intercalation of nitrogen gas between the graphene layers forming the surface layers of graphite, followed by the conversion of intercalated nitrogen atoms to $^{14}C$ during the neutron bombardment. The surface enrichment of the reactor graphite stack surface with the $^{14}C$ carbon isotope is also confirmed by the experiments [2-3]. Therefore, the plasma mass transfer of atoms that make up the surface layers of graphite with a thickness of about 0.1-1 microns to the cooled platform during sputtering can reduce the total $^{14}C$ activity of a standard graphite brick by 10 or more times.

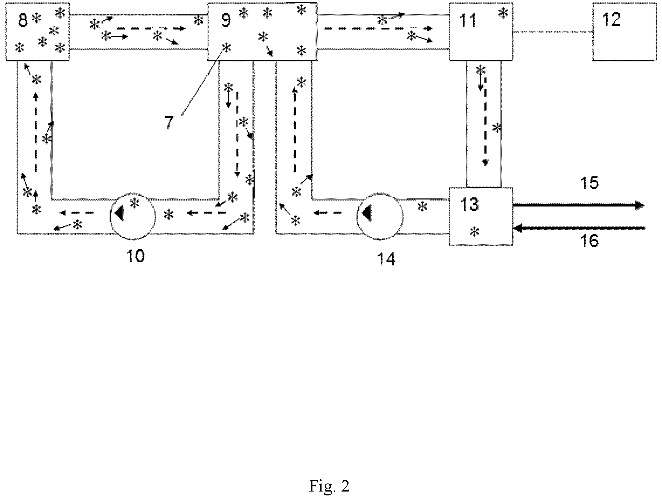

The present method will also be applied to remove radioactive contamination of the primary reactor coolant circuit (in particular, the WWER or RBMK type), which occur due to the precipitation of active isotopes in the form of an insoluble precipitate on the inner surfaces of the primary reactor coolant circuit during the circulation of the coolant. Among the causes of the coolant radioactive contamination the following may be identified: neutron exposure irradiation of coolant impurities, oxides of structural materials arising from the corrosion processes, as well as violation of the tightness of fuel assemblies with subsequent transfer of radioactive elements into the coolant. The scheme of transfer of the radioactive isotopes by the coolant and their precipitation on the surfaces of the primary reactor coolant circuit components is illustrated in Fig. 2. The highest concentration of the radioactive isotopes 7 (indicated by asterisks) is formed in the area of fuel assemblies in the reactor 8. Further, these radionuclides are carried by the circulation of the coolant (the direction of circulation is shown by the broken arrows) through the steam separator 9, the main circulator 10, the turbine 11, the generator 12, the condenser 13, the feed pump 14, polluting the surfaces of these primary reactor coolant circuit components. For completeness, Fig.2. shows the water flow course from the 2nd cooling circuit to the spillway 15 and the direction of water from the reservoir 16. The radionuclides precipitated on the surfaces cannot penetrate deeply into design elements and pipelines, since they are made of high-strength stainless steels, so the decontamination method by plasma sputtering of the precipitated surface layer of contamination is effective.

Thus, it can be concluded that the present decontamination method of the design components of the nuclear power plants and graphite stack will allow, after removing highly active surface contamination, to reduce the radioactivity of the design components of the nuclear power plants by an order of magnitude or more, which will make it possible to reduce the cost of handling the remaining RW and the regulations of their disposal.

The method is embodied in the following way.

The treatment of the nuclear reactor design component with low-temperature plasma is carried out when a flow of reactionless gas is supplied, which is removed from the treatment zone using a gas line. As a reactionless gas, argon or nitrogen are mainly used, the reactionless gases that do not enter into chemical reactions with the sputtered atoms.

The decontaminated surface of the design component is chosen as the cathode, and the electrode serves as the anode. Decontaminated design components can be the surfaces of the irradiated graphite stack of the nuclear reactor, the internal surfaces of the primary reactor coolant system, as well as its pipelines and coolant circulation systems.

An electrode is brought to the selected site on the surface of the design component, a plasma discharge is ignited between the electrode and the surface of the design component, and the cathode surface is sputtered. Therein, the operating parameters of the discharge are selected based on the condition of effective sputtering of the cathode. As the operating parameters of the discharge ensuring effective sputtering of the cathode surface, a number of indicators are selected that depend on each other, while the pressure of the supplied inert gas is selected on the order of the atmospheric one or lower, the gap between the electrode and the surface is selected so that it does not exceed 100 electron free path at the operating pressure of the inert gas, and the electric voltage of the plasma discharge between the electrode and the surface is in the range of 300 to 1000 Volts, and the current density of the plasma discharge lies in the range of 0.1 - 1 A/cm2. According to the present method as a working parameter category the repetitively-pulsed mode of plasma discharge may be chosen, and the pulses duration and their duty cycle according to the performance of the process of mass transfer of the sputtered atoms on the anode and taking into the account the cooling rate of the electrode may be determined.

The electrode can be made of copper, aluminum, or aluminum alloy, or refractory metal, or of tantalum. In the case of the implementation of the present invention with the electrode made of a refractory metal, it is possible to maintain the temperature of the electrode sufficiently high in order to condense less volatile sputtered atoms on the surface of the electrode, and more volatile ones - on the surface of the gas line that removes the reactionless gas.

The shape of the electrode surface is preferably chosen similar to the shape of the surface of the treated design component so that the gap between the electrode and the treated component is unchanged over the entire surface.

During the surface treatment with a low-temperature plasma discharge, isotopes are sputtered, and therefore the sputtered isotopes are precipitated on the surfaces of the supplied electrode and gas line by cooling the latter. That is, the electrode and the gas line that removes the reactionless gas from the discharge zone are cooled to the temperature sufficient for deposition of the sputtered atoms on the surface of the electrode and the line, after sputtering the cathode to a given depth.

After that, the electrode is moved to a new selected treatment site and the method operations are repeated until the entire surface of the decontaminated design component is completely treated.

According to the present method, the electrode and gas line, diverting inert gas from the zone of the plasma discharge can be cooled by forced circulation of a liquid or gaseous coolant having the set input temperature, therein they create such a temperature distribution along the length of the gas line, the discharge inert gas and sputtered atoms from the plasma discharge zone so that sputtered atoms with different temperatures of evaporation will condense at different parts of the line.

The surface temperature of the electrode and the line sufficient for precipitation of the sputtered atoms is preferably chosen equal to the temperature at which the saturated vapor pressure of the precipitated atoms is 0.01 - 10 PA.

The cathode sputtering depth is controlled by the level of residual radioactivity after treating the site on the surface of the nuclear reactor design component.

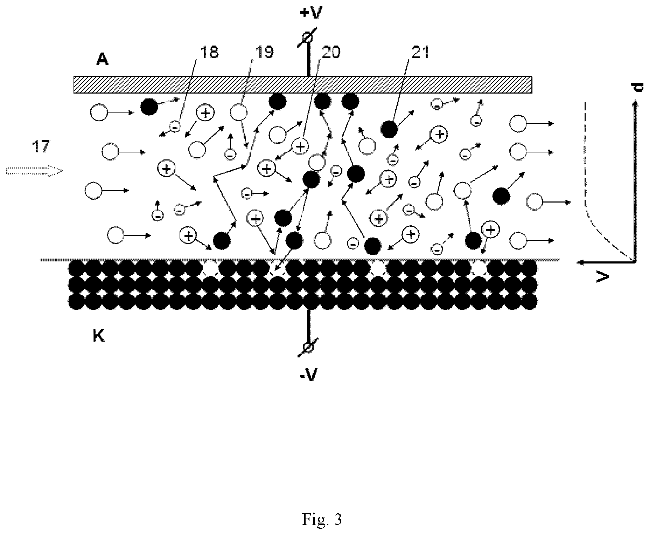

The general view of the device for implementing plasma surface sputtering, collecting and removing radionuclides is shown on Fig. 3. The discharge is ignited between the treated surface - the cathode (K) and the positively charged cooled copper (or aluminum) electrode - the anode (A). The inert gas (argon, xenon, helium, neon) is fed into the discharge gap between (A) and (K) in the direction 17. The glow discharge occurs as a result of applying a voltage between the electrodes (A) and (K), the high-energy electrons 18 born in the discharge collide with the atoms of the inert gas 19 and lead to the formation of positive ions of the inert gas 20. The distribution of the potential $V$ over the length of the discharge gap $d$ is shown in the right part of Fig. 3. It is necessary to note the formulation of the significant voltage flicker near the cathode (cathode fall) due to the known self-organization of the spatial structure of the plasma discharge. The ions of the reactionless gas 20, which acquire energy in this field, knock out the atoms 21 of the cathode material (K), simultaneously causing the emission of secondary electrons 18 from the cathode. Sputtering of a surface with any geometry and any component composition is provided by the formation of a near-surface cathode layer of plasma with energy of the ions bombarded which may be controlled. Neutral knocked-on atoms 21 from the cathode material (K) reach the forced-cooled electrode (A) and precipitate on its surface. Thus, sputtering occurs when the reactionless gas is supplied to the discharge gap, the discharge is ignited, and the sputtering products 21 are pumped out, during which they precipitate on the cooled electrode (A). It is advisable to use argon as a reactionless gas, as it is cheaper and has the necessary electrophysical properties, as well as nitrogen.

It is practicable to treat the surface of irradiated graphite in an argon plasma medium at a pressure of $P \sim 0.1$ atm, and set the distance $d$ between the treated surface and the cooled electrode to $\sim 2$ mm. According to the well-known Paschen curve, which describes the conditions for the occurrence of various types of discharge depending on the electric-field intensity, the value of the applied voltage between the treated surface and the electrode for igniting the discharge in argon should be at least 100 V. At the discharge voltage $\sim 600V$, the sputtering yield of graphite with argon ions is about $K=0.1$ [4]. The sputtering rate of the cathode material $V_p$, which characterizes the thickness of the removed material layer per unit time for a given ion current density, is equal to:

$$V_p = K \cdot j \cdot M_c / e \cdot N_a \cdot \rho \qquad (3)$$

where $e$ is the electric charge, C (coulomb); $\rho$ is the material density, g/cm3; $j$ is the ion current density, A/cm2; $M_s$ is the mass of the material (carbon) atoms, g/mol; $N_a$ is the Avogadro number, mol-1, or
$V_p = h/t$ is the sputtering rate, where $h$ is the thickness of the material layer to be etched, cm; t is the sputtering time, s.

The sputtered atoms from the treated surface diffuse in the argon atmosphere from the cathode to the platform (anode). In the present case, the diffusion is described by the one-dimensional Laplace equation with the boundary conditions at the cathode and anode:

$$\Delta n(x) = 0; \qquad dn(x)/dx = -F/D \qquad \text{where} \quad x=0; \quad n(d)=0 \qquad (4)$$

where $n(x)$) is the concentration of the sputtered atoms of the treated surface (cathode), $F$ is the density of the flow of the sputtered atoms that have left the cathode, D is the diffusion factor of the sputtered atoms in an inert gas medium, $x=0$ and $x=d$ are the coordinates of the cathode and header (anode) surfaces, respectively. The solution of the equation (4) is the function:

$$n(x) = F \cdot (d-x)/D \qquad (5)$$

demonstrating a linear cutoff in the concentration of the sputtered atoms from the cathode to the anode, while the flow density of the sputtered atoms that have left the cathode is preserved along the entire length of the gap between and is equal to the flow density of atoms reaching the header.

Depending on the cathode temperature and the energy of the projectile ions, it is possible to control the atoms behavior kinetics on the cathode surface and implement various options for influencing the cathode surface when one of the processes is prevailing for removing atoms from the treated surface: ion sputtering, chemical reactions, or thermal desorption.

Depending on the contamination nature and types of NPP design components optimal experimental conditions of discharge ignition varies in the wide ranges: pressure and composition of the reactionless gas or of the gaseous mixture (Ar, Xe, Kr, $N_2$, etc.), the distance between the working electrode and the surface, the magnitude of the applied voltage, the current density in the discharge. Discharge ignition can be performed in a stationary or repetitively-pulsed mode, depending on the state of the sputtered surface and the required energy input to the plasma, while the period and duration of the pulse can vary widely to achieve the optimal gas temperature in the discharge gap. The electrode and the gas line that removes the chemically inert gas from the plasma discharge zone are cooled by forced circulation of a liquid or gaseous refrigerant (for example, water or liquid nitrogen vapors) having a set input temperature, where applicable.

In addition, for the selective isolation of radioactive isotopes of various chemical elements for their subsequent useful application, it is possible to create such a temperature distribution along the length of the gas line that removes the reactionless gas and the sputtered atoms from the plasma discharge zone that the sputtered atoms of different chemical elements with different evaporation temperatures will condense on different sections of the line. It has been established that the precipitation velocity and the reverse of evaporation of a set kind of atoms is determined by the vapor pressure of this substance, therefore, the temperature of the electrode surface or part of the highway intended for the precipitation of the specified sputtered atoms can be selected in a range in which the vapor pressure of the precipitated atoms is, for example, from 0.01 to 10 Pa. If it is necessary to precipitate preferably low-volatile atoms (e.g., carbon and $^{14}$C isotope),so the electrode is made of refractory metal (e.g., tantalum Ta) in order to be able due to energy of plasma or an additional heating source to maintain its temperature sufficiently high (e.g., 2000° C) in order to condense the more volatile of the sputtered atoms (Co, Cs, etc.) is not on the surface of the electrode but on the surface of the colder sections of the gas line, diverting reactionless gas.

Further these sections of the line with the precipitated atoms of the selected chemical element containing the desired isotope are separated and can serve as sources of the selected isotope. Thus, for example, $^{14}$C, [40]Co, [41]ca, [137]Sr, and $^{137}$Cs isotopes can be selectively obtained during decontamination of radioactively contaminated nuclear power plant components.

The $10 \times 10$ cm plasma source moves on the manipulator step by step, covering all points of the internal surfaces of the primary reactor coolant circuit, as well as on the surface of the graphite stack, while surface atoms enriched with isotopes are transferred to the surface of the cooled header (anode) and the exhaust gas line. Radiation detectors may also be mounted on an additional manipulator to monitor the degree of decontamination of the treated surfaces

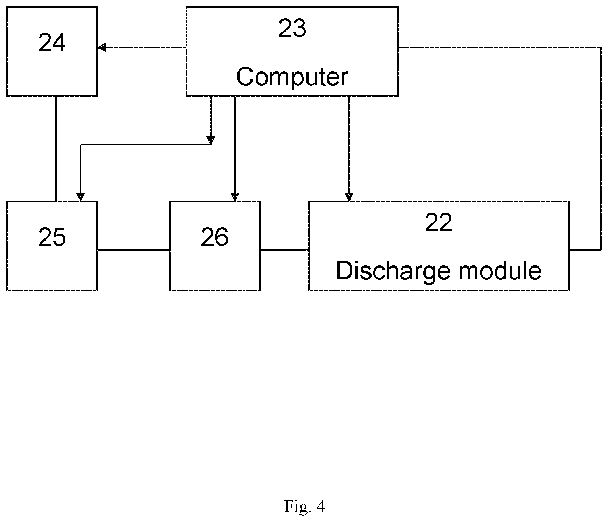

The flow diagram of the surface treatment device, the function of which is based on the present method, is shown on Fig.4. The discharge module 22 and its parameters are controlled remotely using a computer 23, the discharge ignition parameters are set and controlled using the power supply 24, the key 25 and the current meter 26. The electrode with a concentrated highly active precipitate is periodically removed and can be either compactly disposed or used as a concentrate with a high degree of enrichment with the desired isotope (in particular, $^{14}$C) for useful application in medicine.

One example of the embodiment of the present invention is the ignition of a DC plasma discharge in an argon medium at a pressure of $P \sim 0.1$ atm, the header (anode) is installed at a distance of 2 mm above the surface of the decontaminated graphite. The operating voltage at the discharge gap is set by the power supply in the range of 300-1000 V, which is necessary to ignite the discharge, and then adjusted to the optimal value necessary for the stability of the discharge and achieving the desired current density. The sputtering yield of graphite by argon ions with an energy in the range of 100-500 eV (the energy of ions after passing the plasma cathode layer) is $0.03 \div 0.1$ [4]. When the ion current density is $j$=1A/cm$^2$, the rate of carbon sputtering by argon ions will be $0.75\times10^{-5}$ cm/s, and it will take ~ 13 s to sputter a graphite layer with a thickness of 1 micron. The thickness of the surface contamination of graphite bricks due to the precipitation of $^{14}$C from the nitrogen-helium mixture on the surface, as well as the transmutation of intercalated nitrogen to $^{14}$C in the surface layer of graphite does not exceed 1 micron. Thus, plasma treatment of the surface of the graphite brick with dimensions of 25x25x60 cm and a surface area of 7250 cm$^2$ with a plasma electrode with an area of 100 cm$^2$ to a depth of 1 micron will take about 1000 seconds. The total surface area of the graphite stack of the type RBMK reactor is about $1.4\times10^8$ cm$^2$, and the total time for treating the surface layer with a thickness of 1 micron of the entire graphite stack of the type RBMK reactor (with the simultaneous use of 10 devices based on the present method) it is approximately $2\times10^6$ s, i.e. about 1 month.

Another example of the embodiment of the present invention is the ignition of a DC plasma discharge in an argon medium at a pressure of $P \sim 0.1$ atm, the header (anode) is installed at a distance of 2 mm above the decontaminated surface made of the steel (iron). The operating voltage at the discharge gap is set by the power supply in the range of 400-600 V. The sputtering yield of iron atoms by argon ions with the energy in the range of 100-500 eV equals to 0.2-1.0 [4]. When the ion current density is $j$=1A/cm$^2$, the rate of iron sputtering by argon ions will be $7\times10^{-5}$ cm/s, and it will take ~ 1.3 s to sputter a layer of steel with precipitated impurities of 1 micron thick from the selected site of the design component of the primary reactor coolant circuit.

The third example of the embodiment of the present invention is the ignition of a DC plasma discharge in an argon medium at a pressure of $P \sim 0.1$ atm, the header (anode) is installed at a distance of 2 mm above the decontaminated surface made of stainless steel (chromium). The operating voltage at the discharge gap is set by the power supply in the range of 400-600 V. The sputtering yield of chromium atoms by argon ions with energy in the range of 100-500 eV equals to 0.12-0.6 [4]. When the ion current density is $j$=1A/cm$^2$, the rate of iron sputtering by argon ions will be $4\times10^{-5}$ cm/s, and thus it will take ~ 2 s to sputter a layer of steel with precipitated impurities of 1 micron thick from the selected site of the design component of the primary reactor coolant circuit.

The fourth example of the embodiment of the present invention is the ignition of a DC plasma discharge in a nitrogen atmosphere, the header (anode) is installed at a distance of 2 mm above the decontaminated surface of graphite. The operating voltage at the discharge gap is set by the power supply in the range of 400-600 V. The sputtering yield of carbon atoms by nitrogen ions N$^+$ with the energy in the range of 100-500 eV equals to 0.2-0.5 [6]. The sputtering yield of carbon atoms by nitrogen ions N$_2^+$ with the energy of 150 eV equals to 0.5, which is an order of magnitude higher than the sputtering yield by argon ions [7]. Therein, the sputtering yield and transfer of material to the header under conditions of N$_2^+$ ions predominance, as well as the decontamination performance, increases by an order of magnitude.

In addition, the contaminated surfaces of the primary reactor coolant circuit designs contain a number of radionuclides that can be selectively collected for subsequent useful application, for example, for the production of radioisotope energy sources, fire safety sensors, applications in nuclear medicine and as isotope indicators. In particular, selective separation of the various radioactive atoms sputtered in an inert gas conditions (argon, xenon) from contaminated surfaces may be achieved by controlling the header temperature (changing the energy deposition to the plasma gap and the corresponding heating of the electrodes) and temperature distribution along the gas line that removes the inert gas.

For example, if the plasma energy is used to maintain the temperature of the electrode and the adjacent section of the discharge gas line of the order of 2200° K, then only carbon atoms, including the $^{14}$C isotope, will be precipitated in this area, and other atoms will move further along the discharge gas line along with the flow of the heated inert gas. As the gas flow moves along the discharge line, the inert gas and the sputtered atoms it carries will cool down. In the section of the gas bleed line where the gas temperature reaches a value of about 1700° C, the precipitation of Co atoms, including the isotope $^{60}$Co, will begin. (according to the data on the saturated vapor pressure of various elements [5] at a temperature of 1700°K the density of saturated calcium vapors Co is $10^{-1}$ Pa). Further along the gas line, after cooling to the temperature of 720°C, the $^{41}$Ca isotope sputtered from the treated surface will be precipitated (half-life $1.3*10^5$ years, specific activity $4.3*10^2$ Bq/g in reactor graphite), and other, more volatile radioactive atoms will remain in the gaseous state and move further along the gas bleed line. Further, as the gas flow cools down, at the temperature of the section of the gas bleed line of the order of 350°K, the caesium and its isotope $^{137}$Cs sputtered from the treated surface (half-life of 30 years, specific activity of $9*10^2$ Bq/g in reactor graphite) will begin to condense (at this temperature, the density of the saturated caesium Cs vapors is $10^{-1}$ Pa). After the accumulation of the sputtered atoms, the gas bleed line is divided into segments with selectively isolated isotopes, and they can be used for their intended purpose.

From the point of view of the industrial applicability of the present invention, for the implementation of the present method, constructively known and commercially produced electronic power supplies, electronic components, gas fittings and control devices are used.

INFORMATION SOURCE

**EP 3 886 117 B1**

1. J. Kopecky // Atlas of Neutron Capture Cross Sections // INDC(NDS)-362, 1997, P. 369

2. LaBrier Daniel, Dunzik-Gougar, Mary Lou // Characterization of 14C in neutron irradiated NBG-25 nuclear graphite //Journal of Nuclear Materials 2014, V. 448, I.1-3, p. 113-120

3. Dunzik-Gougar, Mary Lou; Smith Tara E // Removal of carbon-14 from irradiated graphite // Journal of Nuclear Materials 2014, V.451, I. 1-3, p. 328-335

4. "Applied Physics Issues. Sputtering of Solids by Ion Bombardment", volume 1 edited by R. Berish, "Mir" Publishing House, Moscow 1984, p.335

5. R.E.Honig, D.A.Kramer // RCA Rev. 1969, V.30, p.285

6. K. Bystrov, T. W. Morgan, I. Tanyeli, G. De Temmerman, M. C. M. van de Sanden // Chemical sputtering of graphite by low temperature nitrogen plasmas at various substrate temperatures and ion flux densities// Journal of Applied Physics 2013, V.114, I.13, P. 133301

7. P. Hammer, W. Gissler // Chemical sputtering of carbon films by low energy N2+ ion bombardment // Diamond and Related Materials, 1996, V.5, I.10, P.1152

**Claims**

1.  Method for decontaminating a structural element of a nuclear reactor (8), comprising the nuclear reactor design component treating with a low-temperature plasma under the flow of reactionless gas wherein the selected site on the surface of the design component is supplied to the electrode, ignite plasma discharge between the surface of the design component is connected as the cathode, and the electrode connected as the anode, the operating parameters of the discharge effective to sputtering of the cathode surface are chosen, the cathode is sputtered, the electrode and gas pipeline, diverting inert gas (20) from the discharge zone (22) are cooled to the temperature sufficient for the precipitation of the sputtered atoms on the surface of the electrode and gas pipeline, and after sputtering the cathode surface to the specified depth, the electrode is moved to a new area of treatment of the surface of the nuclear reactor design component and the process steps are repeated until complete treatment of the entire surface, **characterized in that** the electrode and the gas pipeline that removes the reactionless gas from the plasma discharge zone (22) are cooled by forced circulation of a liquid or gaseous refrigerant having a set input temperature.

2.  Method according to the claim 1, **characterized in that** the surface of the irradiated graphite stack of a nuclear reactor (8) is used as decontaminated design components.

3.  Method according to any of the preceding claims, the internal surfaces of the primary reactor coolant circuit, as well as its pipelines and coolant circulation systems, can be used as the design components.

4.  Method according to any of the preceding claims, **characterized in that** argon is used as the reactionless gas.

5.  Method according to any of claims 1 to 3, **characterized in that** nitrogen (1) is used as the reactionless gas.

6.  Method according to any of the preceding claims, **characterized in that** the electrode is made of copper or **in that** that the electrode is made of aluminum or aluminum alloy or **in that** the electrode is made of a refractory metal or **in that** the electrode is made of tantalum.

7.  Method according to any of the preceding claims, **characterized in that** a temperature distribution along the length of the gas line is created that removes reactionless gas and sputtered atoms from the plasma discharge zone (22) so that the sputtered atoms with different evaporation temperatures will condense on different sections of the line.

8.  Method according to any of the preceding claims, **characterized in that** the surface temperature of the electrode and the line is chosen equal to the temperature at which the saturated vapor pressure of the precipitated atoms is 0.01 - 10 PA.

9.  Method according to any of the preceding claims, **characterized in that** the shape of the electrode surface is chosen similar to the shape of the surface of the treated design component so that the gap between the electrode and the treated component is unchanged over the entire surface.

10. Method according to any of the preceding claims, **characterized in that** the pressure of the supplied inert gas (20) of the order of the atmospheric one or lower is selected as the operating parameter of the discharge.

11. Method according to any of the preceding claims, **characterized in that** the gap between the electrode and the surface is preferably set as the operating parameter of the discharge so that it does not exceed 100 lengths of the electron free path at the operating pressure of an inert gas (20).

12. Method according to any of the preceding claims, **characterized in that** the electrical voltage between the electrode and the surface is set as the operating parameter of the discharge in the range from 300 to 1000 Volts.

13. Method according to any of the preceding claims, **characterized in that** operating parameter of the current density of the plasma discharge is set in the range of 0.1 - 1 A/cm$^2$.

14. Method according to any of the preceding claims, **characterized in that** the repetitively-pulsed mode of plasma discharge is chosen as the operating parameter, and the pulses duration and their duty cycle according to the performance of the process of mass transfer of the sputtered atoms on the anode and taking into the account the cooling rate of the electrode is determined.

15. Method according to any of the preceding claims, **characterized in that** the the cathode sputtering depth is controlled by the level of residual radioactivity after treating the site on the nuclear reactor design component surface.

**Patentansprüche**

1. Verfahren zur Dekontamination eines Strukturelements eines Kernreaktors (8), umfassend die Behandlung des Kernreaktorbauteils mit einem Niedertemperaturplasma unter dem Strom eines reaktionsfreien Gases dabei wird eine ausgewählte Stelle auf der Oberfläche des Bauteils einer Elektrode zugeführt, zünden Sie eine Plasmaentladung zwischen der Oberfläche des Bauteils, die als Kathode geschaltet ist,und der als Anode geschalteten Elektrode gezündet, die Betriebsparameter der Entladung so gewählt werden, dass ein effektives Sputtern der Kathodenoberfläche erfolgt, die Kathode gesputtert wird, die Elektrode und die Gasleitung, die das inerte Gas (20) aus der Entladungszone (22) ableitet, auf eine Temperatur gekühlt werden, die ausreichend ist, um die abgeschiedenen Atome auf der Oberfläche der Elektrode und der Gasleitung auskondensieren zu lassen, und nach dem Abtragen der Kathodenoberfläche bis zu einer vorgegebenen Tiefe die Elektrode in einen neuen Behandlungsbereich der Oberfläche der Konstruktionskomponente des Kernreaktors bewegt wird und die Verfahrensschritte wiederholt werden, bis die gesamte Oberfläche vollständig behandelt ist, **dadurch gekennzeichnet, dass** die Elektrode und die Gasleitung, die das reaktionsfreie Gas aus der Plasmaentladungszone (22) ableiten, durch eine erzwungene Zirkulation eines flüssigen oder gasförmigen Kältemittels mit einer vorgegebenen Eintrittstemperatur gekühlt werden.

2. Verfahren nach Anspruch 1, **dadurch gekennzeichnet, dass** die Oberfläche des bestrahlten Graphitstapels eines Kernreaktors (8) als dekontaminierte Konstruktionskomponenten verwendet wird.

3. Verfahren nach einem der vorhergehenden Ansprüche, wobei die Innenflächen des Primärkühlmittelkreislaufs des Reaktors sowie dessen Rohrleitungen und Kühlmittelzirkulationssysteme als Konstruktionskomponenten verwendet werden können.

4. Verfahren nach einem der vorhergehenden Ansprüche, **dadurch gekennzeichnet, dass** Argon als reaktionsfreies Gas verwendet wird.

5. Verfahren nach einem der Ansprüche 1 bis 3, **dadurch gekennzeichnet, dass** Stickstoff (1) als reaktionsfreies Gas verwendet wird.

6. Verfahren nach einem der vorhergehenden Ansprüche, **dadurch gekennzeichnet, dass** die Elektrode aus Kupfer, Aluminium oder einer Aluminiumlegierung, einem hochschmelzenden Metall oder Tantal besteht.

7. Verfahren nach einem der vorhergehenden Ansprüche, **dadurch gekennzeichnet, dass** entlang der Gasleitung eine Temperaturverteilung erzeugt wird, die reaktionsfreie Gas und abgesputterte Atome aus der Plasmaentladungszone (22) entfernt, sodass die abgesputterten Atome mit unterschiedlichen Verdampfungstemperaturen an verschiedenen Abschnitten der Leitung kondensieren.

8. Verfahren nach einem der vorhergehenden Ansprüche, **dadurch gekennzeichnet, dass** die Oberflächentemperatur der Elektrode und der Leitung so gewählt wird, dass der Sättigungsdampfdruck der abgeschiedenen Atome 0,01-10 Pa beträgt.

9. Verfahren nach einem der vorhergehenden Ansprüche, **dadurch gekennzeichnet, dass** die Form der Elektrodenoberfläche analog zur Form der Oberfläche des behandelten Bauteils gewählt wird, sodass der Abstand zwischen Elektrode und behandeltem Bauteil über die gesamte Oberfläche unverändert bleibt.

10. Verfahren nach einem der vorhergehenden Ansprüche, **dadurch gekennzeichnet, dass** als Betriebsparameter der Entladung ein Druck des zugeführten Inertgases (20) in der Größenordnung des Atmosphärendrucks oder darunter gewählt wird.

11. Verfahren nach einem der vorhergehenden Ansprüche, **dadurch gekennzeichnet, dass** der Abstand zwischen Elektrode und Oberfläche als Betriebsparameter der Entladung vorzugsweise so eingestellt wird, dass er 100 Längen der freien Elektronenweglänge beim Betriebsdruck des Inertgases (20) nicht überschreitet.

12. Verfahren nach einem der vorhergehenden Ansprüche, **dadurch gekennzeichnet, dass** als Betriebsparameter der Entladung die elektrische Spannung zwischen Elektrode und Oberfläche im Bereich von 300 bis 1000 Volt eingestellt wird.

13. Verfahren nach einem der vorhergehenden Ansprüche, **dadurch gekennzeichnet, dass** als Betriebsparameter die Stromdichte der Plasmaentladung im Bereich von 0,1-1 A/cm$^2$ eingestellt wird.

14. Verfahren nach einem der vorhergehenden Ansprüche, **dadurch gekennzeichnet, dass** als Betriebsparameter der repetitiv gepulste Modus der Plasmaentladung gewählt wird und die Pulsdauer und deren Einschaltdauer entsprechend der Leistung des Stofftransportprozesses der gesputterten Atome auf die Anode und unter Berücksichtigung der Abkühlgeschwindigkeit der Elektrode bestimmt werden.

15. Verfahren nach einem der vorhergehenden Ansprüche, **dadurch gekennzeichnet, dass** die Kathodenzerstäubungstiefe durch den Grad der Restradioaktivität nach der Behandlung der Stelle auf der Oberfläche des Kernreaktorbauteils gesteuert wird.

**Revendications**

1. Procédé de décontamination d'un élément structurel d'un réacteur nucléaire (8), comprenant le traitement d'un composant de conception du réacteur nucléaire au moyen d'un plasma à basse température sous un flux de gaz non réactif, dans lequel la zone sélectionnée à la surface du composant de conception est amenée à proximité de l'électrode, une décharge plasma est amorcée entre la surface du composant de conception, connectée comme cathode,et l'électrode, connectée comme anode, les paramètres de fonctionnement de la décharge étant choisis de manière à permettre la pulvérisation de la surface cathodique, la cathode étant ainsi pulvérisée, l'électrode et le conduit de gaz, détournant le gaz inerte (20) de la zone de décharge (22), étant refroidis à une température suffisante pour permettre la précipitation des atomes pulvérisés sur la surface de l'électrode et du conduit de gaz, et, après pulvérisation de la surface cathodique jusqu'à une profondeur spécifiée, l'électrode étant déplacée vers une nouvelle zone de traitement de la surface du composant de conception du réacteur nucléaire, et les étapes du procédé étant répétées jusqu'au traitement complet de l'ensemble de la surface,
**caractérisé en ce que** l'électrode et le conduit de gaz évacuant le gaz non réactif de la zone de décharge plasma (22) sont refroidis par circulation forcée d'un fluide frigorigène liquide ou gazeux ayant une température d'entrée prédéfinie.

2. Procédé selon la revendication 1, **caractérisé en ce que** la surface de la pile en graphite irradiée d'un réacteur nucléaire (8) est utilisée comme composant de conception décontaminé.

3. Procédé selon l'une quelconque des revendications précédentes, les surfaces internes du circuit de refroidissement primaire du réacteur, ainsi que ses canalisations et ses systèmes de circulation de réfrigérant, peuvent être utilisés comme composants de conception.

4. Procédé selon l'une quelconque des revendications précédentes, **caractérisé en ce que** l'argon est utilisé comme gaz non réactif.

5. Procédé selon l'une quelconque des revendications 1 à 3, **caractérisé en ce que** l'azote (1) est utilisé comme gaz non réactif.

6. Procédé selon l'une quelconque des revendications précédentes, **caractérisé en ce que** l'électrode est en cuivre, en aluminium ou en alliage d'aluminium, en métal réfractaire ou en tantale.

7. Procédé selon l'une quelconque des revendications précédentes, **caractérisé en ce qu'**une distribution de température est créée le long de la conduite de gaz, éliminant le gaz sans réaction et les atomes pulvérisés de la zone de décharge plasma (22), de sorte que les atomes pulvérisés ayant des températures d'évaporation différentes se condensent sur différentes sections de la conduite.

8. Procédé selon l'une quelconque des revendications précédentes, **caractérisé en ce que** la température de surface de l'électrode et de la conduite est choisie égale à la température à laquelle la pression de vapeur saturante des atomes précipités est comprise entre 0,01 et 10 PA.

9. Procédé selon l'une quelconque des revendications précédentes, **caractérisé en ce que** la forme de la surface de l'électrode est choisie similaire à celle de la surface du composant traité, de sorte que l'espace entre l'électrode et le composant traité reste inchangé sur toute la surface.

10. Procédé selon l'une quelconque des revendications précédentes, **caractérisé en ce que** la pression du gaz inerte (20) fournie, de l'ordre de la pression atmosphérique ou inférieure, est choisie comme paramètre de fonctionnement de la décharge.

11. Procédé selon l'une quelconque des revendications précédentes, **caractérisé en ce que** l'espace entre l'électrode et la surface est de préférence défini comme paramètre de fonctionnement de la décharge de manière à ne pas dépasser 100 longueurs du libre parcours des électrons à la pression de fonctionnement du gaz inerte (20).

12. Procédé selon l'une quelconque des revendications précédentes, **caractérisé en ce que** la tension électrique entre l'électrode et la surface est définie comme paramètre de fonctionnement de la décharge dans une plage de 300 à 1000 volts.

13. Procédé selon l'une quelconque des revendications précédentes, **caractérisé en ce que** le paramètre de fonctionnement de la densité de courant de la décharge de plasma est réglé dans la plage de 0,1 à 1 A/cm$^2$.

14. Procédé selon l'une quelconque des revendications précédentes, **caractérisé en ce que** le mode de décharge plasma à impulsions répétitives est choisi comme paramètre de fonctionnement, et la durée des impulsions et leur rapport cyclique sont déterminés en fonction de la performance du processus de transfert de masse des atomes pulvérisés sur l'anode et en tenant compte de la vitesse de refroidissement de l'électrode.

15. Procédé selon l'une quelconque des revendications précédentes, **caractérisé en ce que** la profondeur de pulvérisation cathodique est contrôlée par le niveau de radioactivité résiduelle après traitement du site à la surface du composant de conception du réacteur nucléaire.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2546981
- RU 2212074
- EP 1771865 A
- US 9040014 B
- RU 2065220
- RU 2435241
- RU 2580818
- JP 2892857 B

**Non-patent literature cited in the description**

- **J. KOPECKY**. Atlas of Neutron Capture Cross Sections. *INDC(NDS)-362*, 1997, 369
- **LABRIER DANIEL** ; **DUNZIK-GOUGAR** ; **MARY LOU**. Characterization of C in neutron irradiated NBG-25 nuclear graphite. *Journal of Nuclear Materials*, 2014, vol. 448 (1-3), 113-120
- **DUNZIK-GOUGAR, MARY LOU** ; **SMITH TARA E**. Removal of carbon-14 from irradiated graphite. *Journal of Nuclear Materials*, 2014, vol. 451 (1-3), 328-335
- Mir. Applied Physics Issues. Sputtering of Solids by Ion Bombardment. Publishing House, 1984, vol. 1, 335
- **R.E.HONIG** ; **D.A.KRAMER**. *RCA Rev.*, 1969, vol. 30, 285
- **K. BYSTROV** ; **T. W. MORGAN** ; **I. TANYELI** ; **G. DE TEMMERMAN** ; **M. C. M. VAN DE SANDEN**. Chemical sputtering of graphite by low temperature nitrogen plasmas at various substrate temperatures and ion flux densities. *Journal of Applied Physics*, 2013, vol. 114 (13), 133301
- **P. HAMMER** ; **W. GISSLER**. Chemical sputtering of carbon films by low energy N2+ ion bombardment. *Diamond and Related Materials*, 1996, vol. 5 (10), 1152